# FASCICULE DE BREVET EUROPEEN

(11) **EP 1 618 324 B1**
(45) Date de publication et mention de la délivrance du brevet: **20.09.2006**
(21) Numéro de dépôt: 04742830.5
(22) Date de dépôt: 05.04.2004
(51) Int. Cl.: F16K 1/42, F16K 27/02

(54) **DISPOSITIF A CLAPET DE REGULATION DU DEBIT D UN FLUIDE**
FLUIDSTROMREGELVENTILVORRICHTUNG
FLUID FLOW CONTROL VALVE DEVICE

(30) Priorité: 18.04.2003 FR 0304871
(43) Date de publication de la demande: 25.01.2006
(73) Titulaire: Velan S.A.S., 69007 Lyon (FR)
(72) Inventeur: MICHEL, Roland, F-38200 Vienne (FR); GODARD, Christian, F-69680 Chassieu (FR); MAZEL, Jean-Luc, F-69340 Francheville (FR)
(74) Mandataire: Fleurance, Raphael
(86) Numéro de dépôt international: PCT/FR2004/050143
(87) Numéro de publication internationale: WO 2004/094878

(56) Documents cités:
- EP-B- 0 177 397
- DE-A- 2 346 767
- FR-A- 1 182 016
- GB-A- 1 385 322
- US-A- 3 648 718

## Description

La présente invention a pour objet des perfectionnements aux dispositifs à clapet de régulation de débit de fluide dans des canalisations, tels que des robinets ou des valves à clapet, de préférence à siège démontable et à maintenance rapide.

De façon plus précise la présente invention concerne un robinet ou une valve à clapet utilisable notamment dans des installations nucléaires et dont le démontage, en particulier celui du siège est de préférence aisé.

Dans les réacteurs nucléaires du type à eau sous pression, l'énergie produite par la réaction de fission du matériau nucléaire constituant le coeur du réacteur est transmise à un échangeur thermique primaire par une circulation d'eau dite primaire entre la cuve du réacteur et l'échangeur thermique primaire. Bien que le matériau combustible soit enfermé dans une gaine étanche de l'élément combustible, il existe toujours un risque de fissures dans cette gaine qui peuvent entraîner un passage de produits de fission dans l'eau primaire. Il est donc nécessaire que l'ensemble des éléments formant le circuit primaire assure un excellent confinement.

En outre, on sait que dans ce type d'installation nucléaire, l'ensemble du circuit primaire est enfermé dans une enceinte de confinement dans laquelle il règne un certain rayonnement. Les interventions à l'intérieur de cette enceinte de confinement sont donc être exceptionnelles et leur durée doit être aussi réduite que possible, cela suppose que l'intervention sur chacun des composants du circuit primaire soit simple. En outre, il est important de connaître à l'avance la durée approximative de l'intervention.

Enfin, compte tenu du rayonnement qui existe à l'intérieur de la cuve primaire du réacteur, et en particulier en raison du rayonnement neutronique, il est extrêmement souhaitable que l'eau primaire ne contienne aucune particule d'un matériau susceptible de donner un produit radioactif. Il importe donc qu'aucun des composants du circuit primaire ne soit réalisé à l'aide d'un matériau susceptible de donner un produit radioactif sous l'effet du rayonnement. C'est en particulier le cas du cobalt.

Ainsi, dans la problématique liée aux circuits primaires de refroidissement de réacteurs nucléaires, parmi les spécifications attendues pour les robinets ou les valves montés sur les différentes parties de tels circuits d'un tel nucléaire, on peut en dégager trois principales. Il est avantageux que le changement du siège du robinet ou de ses éléments d'étanchéité puisse être réalisé rapidement et à l'aide d'opérations simples. Il est également souhaitable que le robinet ne constitue pas un point faible dans le maintien du confinement du circuit primaire, en d'autres termes, il importe que le robinet présente une excellente étanchéité, en particulier vis-à-vis de l'extérieur. Enfin, il est tout à fait recommandé d'éviter d'utiliser dans l'ensemble du robinet des matériaux susceptibles de produire des produits radioactifs sous l'effet du rayonnement.

Ces exigences ont été satisfaites par l'invention objet du brevet Européen EP-B-0 177 397, qui concerne un robinet comportant une soupape destinée à coopérer avec un siège et des garnitures d'étanchéité. Ce robinet est caractérisé en ce que l'extraction du siège et des garnitures d'étanchéité est aisée, en ce que l'étanchéité est parfaitement assurée et en ce que l'utilisation notamment de cobalt est évitée. Ce robinet à soupape et à siège démontable et à maintenance rapide, comprend une tige de commande en translation selon l'axe du robinet, des moyens de manoeuvre pour commander le mouvement de translation de ladite tige, un clapet solidaire d'une extrémité de ladite tige, un corps percé de passages d'entrée et de sortie du liquide débouchant dans une cavité prolongée par un orifice cylindrique disposé selon l'axe dudit robinet pour le passage de ladite tige, une cage logée dans ladite cavité et dans laquelle peut se déplacer ledit clapet sous l'action de ladite tige, des éléments de garniture entourant une portion de ladite tige et un siège pour coopérer avec ledit clapet en position de fermeture. Ledit robinet se caractérise en ce que ledit siège est formé par une pièce distincte dudit corps. Un joint d'étanchéité est interposé entre le corps et le siège amovible. Ce dernier est maintenu en place par un empilage comprimé comprenant la cage, les garnitures d'étanchéité, un fouloir, des rondelles élastiques, et une bride de fouloir. Le chapeau et la bride de fouloir sont solidarisés avec le corps par des tirants. La rotation de la tige de commande dans le sens anti-horaire permet l'extraction des garnitures d'étanchéité. La tête et le siège du robinet peuvent être aisément extraits du corps du robinet sans outillage particulier, ce qui permet de ré-usiner ou de changer ces pièces en atelier et non sur le site. Conformément au cinquième mode de réalisation de l'invention (Figure 5) selon l'EP-B-0 177 397, le siège amovible est constitué par un manchon cylindrique et une collerette externe sur laquelle prend appui la cage, elle-même surmontée par les blocs d'étanchéité et par le fouloir. Le clapet peut se déplacer à l'intérieur de la cage. Le joint d'étanchéité est disposé sous la face inférieure de la collerette du siège. Une bague annulaire coopère avec le manchon cylindrique pour le confinement du joint, également en appui sur la paroi interne du corps creux du robinet. Le manchon cylindrique a une hauteur supérieure à celle du joint et supporte l'essentiel du confinement de ce joint (pression de 700 bars). Il s'est avéré, qu'à l'usage, une structure de ce type peut entraîner une déformation du siège et par suite un problème d'étanchéité au niveau du contact du clapet avec la partie haute du siège, à savoir la collerette 32, e .g. gauchissement de la partie tronconique de contact du siège.

Dans ce contexte, l'un des objectifs essentiels de la présente invention est de perfectionner les dispositifs à clapets de régulation de flux (e.g. robinets, valves) dans des canalisations, les dispositifs considérés étant ceux de l'art antérieur, en particulier selon l'EP-B-0 177 397 et les perfectionnements recherchés ayant pour but de limiter voire de supprimer l'usure de leurs pièces mécaniques constitutives soumises à de très fortes sollicitations mécaniques, pour garantir ainsi l'étanchéité sur de très longues durées d'utilisation.

Un autre objectif essentiel de la présente invention est de proposer les perfectionnement susvisés aussi bien pour des dispositifs de contrôle de débit de fluide à démontage et à maintenance aisés que pour des dispositifs ne présentant pas cette caractéristique.

Un autre objectif essentiel de la présente invention est de perfectionner les dispositifs à clapets de régulation de flux sans grever le coût de revient du dispositif.

Un autre objectif essentiel de la présente invention est d'améliorer l'étanchéité des dispositifs à clapets de régulation de flux (de type robinet) -de préférence à démontage et à maintenance aisés-, qu'il s'agisse aussi bien de l'étanchéité de part et d'autre du système clapet/siège en position fermée, que de l'étanchéité au niveau de la tige de commande.

Un autre objectif essentiel de la présente invention est de perfectionner les dispositifs à clapets de régulation de flux, en mettant en oeuvre des pièces et une structure simples et robustes.

Ces objectifs, parmi d'autres, sont atteints par la présente invention qui concerne un dispositif à clapet de régulation du débit d'un fluide, du type de ceux comprenant :
➢ un corps comportant un passage d'entrée et un passage de sortie de fluide communiquant avec un logement prévu dans ce corps ; ce logement contenant notamment les éléments suivants, de préférence amovibles :
   - au moins un clapet d'ouverture/fermeture mobile en translation;
   - au moins une cage dans laquelle le clapet est guidé lors de ses déplacements en translation, ladite cage étant pourvue d'orifices de mise en communication du passage d'entrée et du passage de sortie, en position d'ouverture du clapet;
   - au moins un siège destiné à coopérer avec le clapet en position de fermeture de ce dernier;
   - au moins un contre-siège en appui sur une partie du corps à l'intérieur du logement contenant les éléments, de préférence amovibles,
   - et au moins un joint d'étanchéité confiné entre le siège et le contre-siège,
➢ et des moyens de compression des éléments, de préférence amovibles, contenus dans le logement du corps;
caractérisé en ce que :
■ la fonction d'étanchéité siège/corps, en position fermée du clapet, est essentiellement assumée par le contre-siège en coopération avec le joint d'étanchéité,
■ et la fonction de confinement du joint d'étanchéité est essentiellement assumée par le contre-siège;
de sorte qu'intervienne un soulagement des contraintes s'exerçant sur le siège, qui est alors peu, voire pas, déformé, ce qui lui permet d'assumer au mieux sa coopération par contact avec le clapet, en position fermée de celui-ci, garantissant ainsi l'étanchéité de la fermeture siège/clapet.

L'obturation du logement du corps de valve ou de robinet communiquant avec les passages d'entrée et de sortie de fluide, résulte de la mise en appui annulaire du clapet sur le siège, sous l'effet de la tige de commande. Pour compléter cette obturation, il est nécessaire que l'étanchéité entre le siège et le corps du dispositif soit parfaite. Conformément à l'invention, cette étanchéité est réalisée au moyen d'au moins trois éléments qui sont le siège, le joint interposé entre le siège et le contre-siège, étant entendu que ces trois éléments, de préférence coaxiaux et superposés, sont soumis à une compression axiale permettant la mise sous pression et le confinement du joint d'étanchéité.

Outre cette compression axiale qui lui est transmise par la cage, le siège supporte également la sollicitation en compression du clapet, il est particulièrement astucieux conformément à l'invention de libérer le siège d'au moins une partie de son rôle d'étanchéification en le transférant au contre-siège, ce dernier contribuant dans cette perspective à l'essentiel du confinement du joint d'étanchéité.

Cette distribution avantageuse des fonctions mécaniques au sein de l'ensemble siège/joint/contre-siège, procure au dispositif à clapet selon l'invention une grande robustesse et une longévité accrue.

Ces dispositions techniques selon l'invention s'appliquent aussi bien dans des dispositifs à clapet à démontage et à maintenance aisés qu'à des dispositifs non démontables aisément.

D'autres caractéristiques et avantages de l'invention apparaîtront plus clairement à la lecture de la description qui suit de deux modes de réalisation de l'invention, à savoir un robinet et une valve, donnés à titre d'exemples non limitatifs. La description se réfère aux dessins annexés dans lesquels :
- la figure 1 est une vue en coupe verticale d'un robinet à clapet et à siège démontable ;
- la figure 1A est une vue de détail d'une zone de la figure 1 délimitée par un cercle et montrant la structure originale de l'ensemble siège/joint/contre-siège ;
- la figure 1B est une vue partielle agrandie de la figure 1 ;
- la figure 2 est une vue en coupe verticale d'une valve à clapet et à siège démontable ;
- la figure 3 est une vue de dessus de la figure 2.

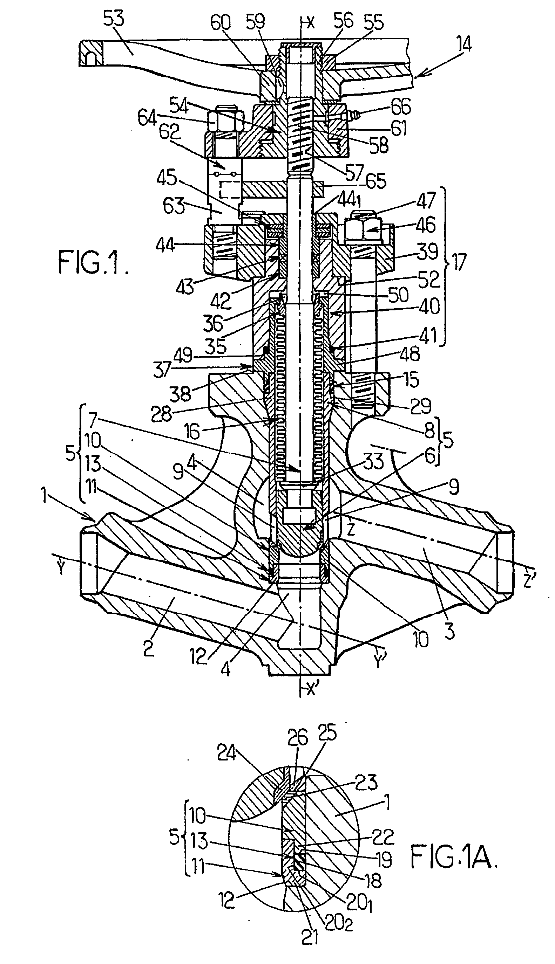

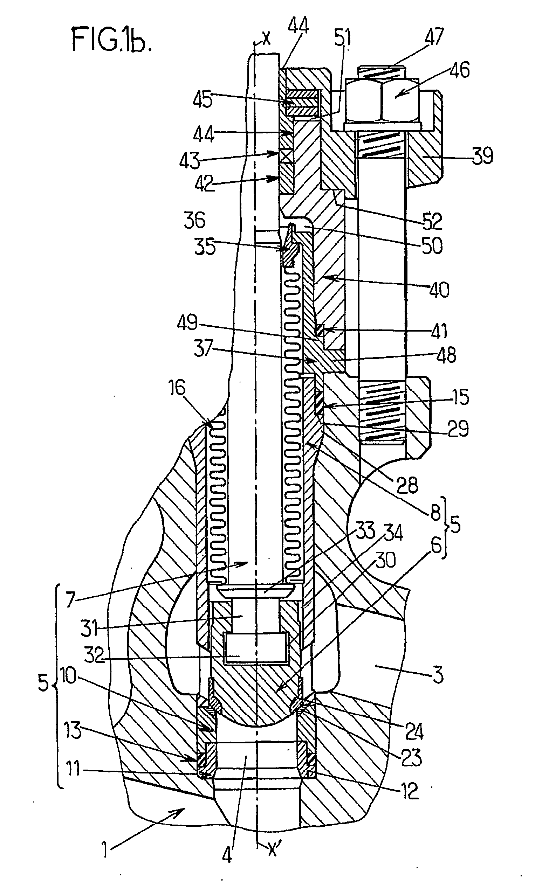

Les figures 1, 1A & 1B représentent un mode de réalisation du dispositif selon l'invention correspondant à un robinet à clapet, à siège démontable et à maintenance rapide. Le robinet comprend un corps creux 1 métallique obtenu e.g. par moulage et usinage et présentant un passage d'entrée 2 et un passage de sortie 3 de fluide, communiquant tous deux avec un logement 4 disposé selon l'axe XX' du robinet.

Ce dernier comporte en outre un ensemble 5 d'éléments (de préférence amovibles) disposés dans le logement 4 et d'axe XX'. Les éléments (de préférence amovibles) de cet ensemble 5 sont les suivants :
- un clapet 6 d'ouverture/fermeture mobile en translation et solidaire de l'extrémité libre inférieure d'une tige de commande 7, mobile en translation selon l'axe XX' du robinet ;
- une cage 8 tubulaire, utile comme guide pour le clapet 6 lors de ses déplacements en translation sous l'action de la tige de commande 7 ; ladite cage 8 étant pourvue d'orifices 9 de mise en communication du passage d'entrée 2 d'axe YY'et du passage de sortie 3 d'axe ZZ'du fluide, en position d'ouverture du clapet 6 ;
- un siège 10 tubulaire, destiné à coopérer avec le clapet 6 ;
- un contre-siège 11 en appui sur un épaulement annulaire 12 du corps 1 ménagé dans la partie inférieure du logement 4 ;
- et un joint d'étanchéité inférieur 13 confiné entre le siège 10 et le contre-siège 11.

Dans sa partie supérieure essentiellement localisée au-dessus du corps 1, le dispositif de robinet à clapet selon les figures 1, 1A, 1B comporte :
- des moyens de manoeuvre 14 pour commander le mouvement de translation de la tige 7 et donc du clapet 6, de la position de fermeture du robinet (en appui sur le siège 10) à la position d'ouverture relevée du clapet 6 ;
- des moyens d'étanchéité 15 propres à empêcher la fuite de fluide entre la cage 8 (de préférence amovible) et le logement 4, lesdits moyens étant de préférence constitués par un joint annulaire supérieur en graphite expansé, par exemple;
- un fourreau d'étanchéité 16 propre à empêcher la fuite de fluide entre la tige 7 et le logement 4, ledit fourreau enveloppant une portion de ladite tige 7;
- et des moyens de compression axiale 17 agissant sur les éléments 8, 10, 13 et 11 superposés selon l'axe XX' du logement 4, ainsi que sur les moyens d'étanchéité 15, pour réaliser l'étanchéité du dispositif.

Sont ainsi superposés et comprimés dans le dispositif selon l'invention, dans le logement 4, du haut vers le bas, le joint annulaire d'étanchéité 15, la cage 8, le siège 10, le joint d'étanchéité 13 et le contre-siège 11, tous ces éléments (de préférence amovibles) étant inclus dans l'ensemble désigné par la référence 5 dans le présent exposé.

Suivant une caractéristique avantageuse de l'invention, le joint d'étanchéité 13 inférieur est un joint annulaire logé dans une chambre de confinement délimitée :
o par une portée annulaire latérale externe 18 définie par une partie de la face interne du logement 4 contenant notamment les éléments (de préférence amovibles) de l'ensemble 5,
o par une portée annulaire supérieure 19, définie par une partie du siège 10,
o et par au moins deux (en l'occurrence 2) portées annulaires 20₁ et 20₂ définies par une partie du contre-siège 11, à savoir une portée latérale interne 20₂ et une portée inférieure 20₁, lesquelles ont ensemble une surface supérieure à celle de la portée annulaire supérieure 19 définie par une partie du siège 10.

La figure 1A montre le détail de la structure de cette chambre de confinement du joint annulaire inférieur 13.

Suivant une caractéristique préférée de l'invention, la surface totale des deux portées annulaires latérale 20₁ et inférieure 20₂ définie par une partie du contre-siège 11, est au moins 1,1, de préférence au moins 1,5, et plus préférentiellement encore au moins 2 fois supérieure à celle de la portée annulaire supérieure 19 définie par une partie du siège 10.

Il ressort des figures 1, 1A et 1B illustrant l'exemple de réalisation du robinet selon l'invention, que le contre-siège 11 est un manchon cylindrique dont l'extrémité inférieure forme une collerette extérieure 21, reposant sur l'épaulement 12 du corps 1 à l'intérieur du logement 4 contenant les éléments 7, 10, 13, 11, de préférence amovibles.

Le siège 10 est une bague en appui sur l'extrémité supérieure du manchon cylindrique constituant le contre-siège 11. Cette bague 10 présente, de préférence, une lèvre périphérique 22 s'étendant vers le bas à partir de la face inférieure de ladite bague. Ladite lèvre est conçue pour être insérée dans la chambre de confinement annulaire délimitée par le manchon cylindrique formant le contre-siège 11 avec ses portées annulaires latérales externes 20₁ et inférieures 20₂ et par la face interne 18 du logement 4 formant la portée annulaire latérale externe, la portée annulaire supérieure 19 étant ainsi constituée par la surface terminale inférieure de la susdite lèvre périphérique 22.

Il doit être noté que le manchon cylindrique du contre-siège 11 a une hauteur telle qu'il joue le rôle d'un limiteur d'écrasement du joint d'étanchéité 13 par la lèvre périphérique inférieure 22 du siège 10.

A l'instar de la chambre de confinement annulaire dans laquelle il est logé, le joint d'étanchéité inférieur annulaire 13 présente une section transversale droite de forme générale rectangulaire ou circulaire.

Avantageusement, le joint d'étanchéité annulaire 13 est de nature et/ou de forme élastique, le graphite, de préférence le graphite expansé, étant tout spécialement approprié à titre de matériau constitutif dudit joint d'étanchéité annulaire.

De préférence, le siège 10 est une bague comportant un coin supérieur interne 23 chanfreiné. Cette surface chanfreinée constitue une portée annulaire d'appui destinée à coopérer avec une portée annulaire de contact correspondante, prévue sur la surface extérieure d'une partie tronconique de la calotte sphérique formant l'extrémité inférieure du clapet 6. Le ou les matériaux constitutifs des pièces comprenant ces portées annulaires étant de préférence choisis parmi les matériaux plus durs que l'acier inoxydable.

En effet, outre la lèvre périphérique 22 inférieure, la bague formant le siège 10, comporte, comme cela apparaît plus nettement sur la figure 1A, un coin supérieur interne 23 chanfreiné est avantageusement rodé et/ou constitué par un matériau différent de celui de la bague 10. En pratique, ce coin 23 chanfreiné est de préférence plus dur que l'acier inoxydable et permet de parfaire l'étanchéité de l'obturation clapet/siège. En effet, la face chanfreinée de ce coin supérieur interne 23 constitue la portée annulaire d'appui pour une portée annulaire de contact correspondante, prévue sur une partie tronconique de l'extrémité inférieure du clapet 6. Cette partie tronconique constitue la base de la calotte sphérique formant l'extrémité inférieure dudit clapet 6. De plus, la portée annulaire de contact du clapet 6 fait partie d'un anneau terminal de contact 24 dudit clapet 6 (figures 1A et 1B). Cet anneau terminal de contact 24 est réalisé en un matériau rodé ou en un matériau différent de celui constitutif du reste du clapet 6 et de même nature ou de nature similaire à celui du coin supérieur interne 23 du siège 10. En l'occurrence, ce matériau est lui aussi de préférence plus dur que l'acier inoxydable
La face 25 supérieure de la bague-siège 10, est disposée dans un plan diamétral par rapport à XX' de ladite bague-siège 10. Cette face supérieure 25 forme une portée annulaire d'appui pour l'extrémité inférieure 26 de la cage de guidage 8 du clapet 6 (figure 1A).

La cage de guidage 8 tubulaire de guidage est percée d'orifices 9 dans sa partie inférieure. Ces orifices 9 débouchent dans le logement 4 et sont en regard du passage de sortie 3 d'axe ZZ'. Il est prévu un espace entre la cage 8 et la face interne du logement 4 du corps 1, au niveau du tronçon inférieur de la cage 8, tandis que cette dernière est en contact intime avec la face interne du logement 4 du corps 1 au niveau de des tronçons médians et supérieurs de la cage tubulaire 8. En d'autres termes, le tronçon inférieur et le tronçon médian de la cage 8 présentent tous deux des diamètres interne et externe identiques et constants, tandis que le tronçon supérieur de cette cage 8 forme un évasement 28 de diamètre externe légèrement supérieur au diamètre externe de ses tronçons médians et inférieurs et de diamètre interne identique au diamètre interne constant de la cage 8. L'évasement 28 de la cage 8 comporte un épaulement 29 sur lequel repose le joint annulaire supérieur d'étanchéité 15.

Le clapet 6 est une pièce cylindrique essentiellement pleine pour laquelle il a déjà été précisé supra que son extrémité inférieure est en forme de calotte sphérique. Cette pièce cylindrique est solidarisée à la tige de commande 7 par l'intermédiaire d'une mortaise 30 destinée à recevoir un tenon 31 constituant l'extrémité inférieure de la tige de commande 7. Ce tenon comprend un collet terminal 32 (figure 1B). Une collerette 33 chanfreinée prévue sur la tige 7 constitue l'embase du tenon 31 et est en appui annulaire sur la face supérieure du clapet 6. En outre, le clapet 6 présente à l'extrémité supérieure de sa face externe une bande annulaire 34 de glissement et de contact avec la face interne de la cage tubulaire 8. Le rôle de cette bande 34 est d'assurer l'étanchéité au niveau du clapet, à l'instar de l'anneau de contact 24 du siège 6 avec le contre-siège 11.

La face supérieure de la collerette 33 de la tige 7 est solidarisée avec l'extrémité inférieure du fourreau d'étanchéité 16 propre à empêcher toute fuite de fluide entre la tige 7 et le logement 4. Avantageusement, ce fourreau d'étanchéité 16 comprend un soufflet de préférence en acier inox et/ou des garnitures, de préférence en graphite, et plus préférentiellement encore en graphite expansé. En l'occurrence, comme montré aux figures 1 et 1B, ce fourreau est un soufflet en acier inox, l'extrémité supérieure de ce soufflet fourreau 16 est solidaire d'un collier 35 lui-même fixé sur les bords de l'extrémité 36 supérieure ouverte d'un chapeau tubulaire 37. Cette extrémité 36 supérieure ouverte est traversé par la tige 7. Le chapeau tubulaire 37 est essentiellement disposé à l'extérieur du corps 1 et coiffe la cage 8. Le joint d'étanchéité supérieur annulaire 15 est interposé entre le chapeau tubulaire 37 et la cage 8. Ainsi, ce fourreau/soufflet 16 d'étanchéité, associé au collier 35, permet de cloisonner la communication existant entre l'intérieur de la cage 8 et du chapeau 37 en relation avec le logement 4, d'une part, et l'extérieur du corps 1, d'autre part.

Les moyens de compression axiale selon XX' de l'empilement ou de la superposition dans le logement 4 du corps 1, des éléments suivants: joint supérieur 15, cage 8, siège 10, joint inférieur contre-siège 11, comportent :
➢ au moins deux mâchoires inférieure 38 et supérieure 39, la mâchoire inférieure 38 étant formée par au moins une partie de la zone supérieure du corps 1 bordant l'alésage constituant le haut du logement 4 du corps 1 et contenant les éléments (de préférence amovibles) : joint supérieur 15, cage 8, siège 10, joint inférieur 13, contre-siège 11 ;
➢ au moins un organe d'entretoisement coaxial à la tige de commande 7 et dans lequel cette dernière est enfilée, cet organe d'entretoisement comprenant, de préférence, au moins trois éléments d'entretoisement superposés/empilés, à savoir:
   ■ le chapeau 37, d'une part, en appui, de préférence par l'intermédiaire d'un moyen d'étanchéité (joint annulaire 15), sur la partie terminale supérieure 28 (épaulement 29) de la cage 8, et d'autre part selon une modalité avantageuse de l'invention, solidaire de l'extrémité supérieure du fourreau/soufflet d'étanchéité par l'intermédiaire du collier 35,
   ■ un fouloir 40,
   ■ un ou plusieurs bagues et/ou joints (41-45),
➢ des moyens de traction 46, 47 permettant de serrer les mâchoires 38, 39 et de comprimer ainsi selon XX' :
   ■ les éléments d'entretoisement : chapeau 37, un joint annulaire 41 éventuel (en l'occurrence présent), fouloir 40, bagues et/ou joints (41-45),
   ■ éventuellement le joint annulaire supérieur 15 (en l'occurrence présent),
   ■ l'ensemble 5 d'éléments (de préférence amovibles) à savoir : la cage 8, le siège 10, le contre-siège 11 et le joint annulaire inférieur 13 interposé entre ces deux dernières pièces.

Le fouloir 40 repose sur le bord périphérique annulaire 48 du chapeau 37 et coiffe ledit chapeau en étant au contact de la surface de révolution de ce dernier par l'intermédiaire de sa face interne. Le joint annulaire 41 interposé entre le fouloir 40 et le chapeau 37 est disposé sur un épaulement annulaire 49 du chapeau 37. Il est prévu un jeu dynamique 50 entre l'extrémité supérieure du chapeau 37 et la partie inférieure du fouloir 40 coiffant ce dernier.
La partie supérieure du fouloir 40 ne coiffant pas le chapeau 37, est une partie tubulaire de plus petit diamètre que la partie tubulaire inférieure. Un passage circulaire pour la tige 7 est prévu dans le fouloir 40 au niveau de la zone séparant la partie inférieure tubulaire coiffant le chapeau 37 et la partie supérieure tubulaire dudit fouloir 40. Le diamètre intérieur de cette dernière est légèrement supérieur au diamètre de la tige de commande, de manière à pouvoir insérer dans l'espace annulaire ainsi ménagé un empilement d'une bague de guidage 42, d'une bague d'étanchéité 43 (e.g. en graphite) et d'une bague 44 d'écrasement de la bague d'étanchéité 43. Ces bagues 42, 43, 44 sont en contact avec la tige de commande 7. La bague 44 d'écrasement la plus haute comporte une partie supérieure en forme de manchon supérieur cylindrique 44₁ de plus faible diamètre que celui de sa partie inférieure, ledit manchon 44₁ s'étendant au-dessus de l'extrémité supérieure du fouloir 40. Trois rondelles élastiques 45 sont enfilées sur ce manchon supérieur 44₁. Du fait de la différence d'épaisseur entre la partie inférieure de la bague 44 et le manchon supérieur 44₁ de celle-ci, il existe un épaulement sur lequel repose les trois rondelles élastiques 45. Cet épaulement étant situé légèrement au-dessus de la surface supérieure du fouloir 40, un jeu 51 est ainsi ménagé entre les rondelles et ladite face supérieure (figure 1B).

La mâchoire supérieure 39 repose sur le fouloir 40 par l'intermédiaire d'une portée annulaire d'appui 52 définie par l'épaulement issu de la différence de diamètre entre la partie inférieure et la partie supérieure du fouloir 40. La mâchoire 39 prend également appui sur les rondelles élastiques 45, par l'intermédiaire de sa zone annulaire bordant et délimitant le passage pour la tige de commande 7 et le manchon supérieur 44₁ de la bague 44.

Les moyens de traction 46, 47 sont constitués par au moins deux tirants 47. L'extrémité inférieure de chaque tirant 47 est vissée dans la partie supérieure du corps 1 constituant la mâchoire 38, tandis que la partie d'extrémité supérieure de chaque tirant 47 traverse la couronne extérieure de la mâchoire 39. Ladite partie d'extrémité supérieure de chaque tirant 47 est filetée de manière à pouvoir être associée à un écrou 46 permettant le serrage des mâchoires 38 et 39, et, par suite, la compression axiale selon XX' de l'empilement ou de la superposition des éléments suivants : fouloir 40, joint 41, chapeau 48, joint 15, cage 8, siège 10, joint 13, contre-siège 11, avec confinement du joint 13.

La compression de ce joint est déterminée pour obtenir une pression supérieure à celle du fluide vis-à-vis duquel on veut assurer l'étanchéité du dispositif.

La manoeuvre de la tige de commande 7 est réalisée à l'aide d'un ensemble 14 comprenant un volant 53, solidaire en rotation et en translation d'une douille 54. La solidarisation est réalisée par un écrou 55 vissé sur l'extrémité supérieure filetée 56 de la douille 54. Cette extrémité supérieure 56 comporte un orifice axial taraudé 57 dans lequel l'extrémité supérieure 58 de la tige de commande 7 est vissée. La solidarisation en rotation de la douille 54 avec le volant 53 est assurée par une clavette 59 engagée dans une rainure radiale de la douille 54 et une rainure du moyeu 60 du volant 53. L'immobilisation en translation de la douille 54 est assurée par un ensemble constitué par une bride supérieure 61 et par des moyens de serrage 62 comprenant au moins un jeu tirant(s) 63 / écrou(s) 64. L'extrémité inférieure de chaque tirant 63 est vissée dans la mâchoire 39, tandis que leur extrémité supérieure est filetée et traverse un alésage prévu dans la bride supérieure 61. Un écrou 64 vissé sur la tête filetée du tirant 63 permet le serrage de la bride 61 vis-à-vis de la mâchoire 39. Il est également prévu un graisseur 66.

Le tirant 63 comporte :
■ un épaulement haut annulaire sur lequel repose la bride supérieure 61, par l'intermédiaire des bords de l'orifice de passage du tirant 63,
■ ainsi qu'au moins un épaulement bas reposant sur la face supérieure de la mâchoire 39, plus précisément sur la zone de cette mâchoire 39 bordant l'orifice taraudé dans lequel est vissée la partie inférieure filetée du tirant 63.
En fait, les extrémités supérieures et inférieures filetées du tirant 63 ont un diamètre inférieur à celui de la partie médiane du tirant 63.

La partie de la tige de commande 7 proximale à son extrémité supérieure filetée 58 est équipée d'une barrette 65 solidaire de la tige de commande 7 et mobile en translation avec celle-ci. Une première fonction de cette barrette est une fonction d'anti-rotation de la tige de commande. La deuxième fonction est d'indiquer par sa position par rapport à des marques disposées sur le tirant 62, à savoir "O" pour robinet ouvert et "F/C" pour robinet fermé ou "closed". Cela permet de visualiser l'ouverture et la fermeture du robinet. Cette barrette 65 d'indication d'ouverture/fermeture est sensiblement orthogonale à l'axe XX'.

Le fonctionnement du robinet à clapet des figures 1, 1A et 1B découle clairement de la description précédente. Dans la position d'ouverture ou de fermeture représentée aux figures 1 et 1B, le clapet 6 est en position basse en contact du siège 10 par l'intermédiaire de l'anneau de contact 24 et du coin supérieur interne chanfreiné 23 respectivement. La pression appliquée découle de la manoeuvre en rotation du volant 53 dans le sens horaire, ce qui provoque la rotation de la douille 54, cette dernière entraînant l'abaissement de la tige de commande 7 et donc du clapet 6. Pour ouvrir le robinet et autoriser la circulation du liquide entre le passage d'entrée 2 et le passage de sortie 3, on tourne le volant 53 dans le sens anti-horaire, ce qui provoque le relèvement de la tige de commande 7 et donc du clapet 6.

Il ressort également de la description de la structure de ce mode préféré de réalisation d'un robinet à clapet selon l'invention (figures 1, 1A et 1B) que le démontage de la tête du robinet est aisé à réaliser par dévissage des écrous 55, 64, 46 et par extraction de la bride supérieure 61, de la mâchoire 39, de la tige de commande 7 et des divers éléments superposés, fouloir 40, chapeau 37, cage 8, siège 10, joint 13 et contre-siège 11.

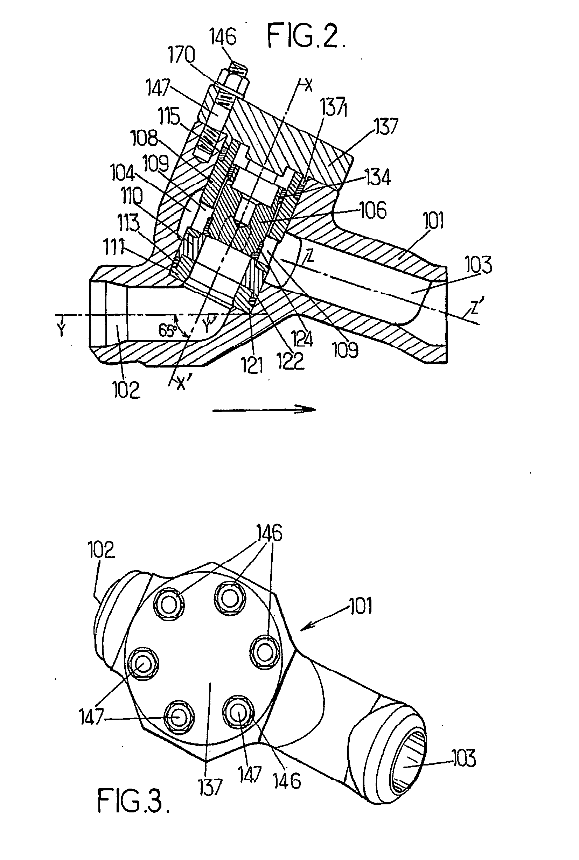

Les figures 2 et 3 montrent un deuxième mode de réalisation du dispositif selon l'invention, constitué par une valve dont les moyens de compression 117 comprennent au moins un chapeau 137, de préférence amovible, formant couvercle fixé solidairement à l'extrémité supérieure ouverte du corps 101, correspondant au logement 104 contenant l'ensemble 105, de préférence amovible : cage 108/siège 110/contre-siège 111, ledit chapeau 137 appuyant sur la cage 108 comprimant ainsi axialement selon XX' le joint 113 interposé entre le siège 110 et le contre-siège 111.

Selon une variante, sont prévus entre le clapet 106 et le chapeau 137 des moyens de rappels élastiques du clapet 106 en position de fermeture de la valve, en appui sur le siège 110.

Cette valve selon l'invention comprend un corps métallique 101 pourvu d'un passage 102 d'entrée de fluide d'axe YY' et d'un passage 103 de sortie de fluide d'axe ZZ', communiquant par l'intermédiaire d'un logement 104. Ce logement accueille l'ensemble 105 d'éléments amovibles suivants:
- une cage 108 de guidage en translation du clapet 106,
- un siège 110 destiné à coopérer en position de fermeture de la valve avec le clapet,
- un contre-siège 111,
- et un joint annulaire 113 disposé dans une chambre de confinement définie par le manchon cylindrique et par la collerette 121 du contre-siège 111, d'une part, ainsi que par la lèvre inférieure 122 du siège 110 d'autre part.

Les éléments de cet ensemble 105 sont soumis à une compression axiale selon l'axe XX' par l'intermédiaire du chapeau 137 fixé solidairement à la partie supérieure du corps 101 bordant l'extrémité ouverte supérieure du logement 104. La fixation du chapeau 137 est réalisée à l'aide de plusieurs systèmes vis 147/écrous 146, en l'occurrence 6 comme montré sur la figure 3.

Le chapeau 137 est en appui sur la cage 108 par l'intermédiaire d'une lèvre 137₁ annulaire saillante vers le bas. Un joint annulaire 115 de section transversale droite rectangulaire, est interposé entre cette lèvre annulaire 137₁ et un épaulement de la cage 108.

Cette dernière est percée d'orifices 109 mettant en communication le passage d'entrée 102, le logement 104 et le passage de sortie 103 en position ouverte relevée du clapet 106.

Ce dernier est guidé en translation par la face interne de la cage 108 entre une position fermée de la valve telle que présentée à la figure 2 et une position ouverte de la valve dans laquelle le clapet 106 est en position relevée, en butée contre la face interne du chapeau 137.

Le clapet 106 est équipé d'un anneau de contact 124 avec le siège 110 ainsi que d'une bande de glissement/contact 134 disposée à l'extrémité supérieure du clapet 106. Ces éléments 124 et 134 concourent à améliorer l'étanchéité du dispositif.

La caractéristique du confinement du joint 113 entre le siège 110 et le contre-siège 111, caractéristique qui constitue l'une des caractéristiques essentielles de l'invention, est tout à fait analogue à cette même caractéristique décrite en relation avec les figures 1, 1A & 1C pour le premier mode de réalisation d'un dispositif selon l'invention constitué par un robinet à clapet.

S'agissant du fonctionnement de cette valve, il y a lieu de noter qu'il s'agit d'une valve anti-retour destinée à éviter le reflux de fluide du passage de sortie vers le logement 104 et vers le passage d'entrée 102. En cours de circulation de fluide selon la direction indiquée sur la figure 2, la pression exercée par le fluide en circulation provoque le relèvement du clapet 106 lequel vient se mettre en butée contre la face interne du chapeau 137. La valve est ainsi ouverte et permet la circulation du fluide au travers du logement 104 et des orifices 109 de la cage 108 en direction du passage de sortie 103. En cas de mise en circulation inopinée d'un fluide en sens inverse par le passage de sortie 103 vers le passage d'entrée 102, le clapet 106 est disposé selon une position de repos abaissée en appui sur le siège 110. Le rappel en position de repos du clapet 106 est d'autant plus favorisé dès lors que l'on prévoit un des moyens élastiques (ressort) que l'on dispose entre le clapet 106 et la face interne du chapeau 137.

Avantageusement toutes les pièces constitutives du robinet selon les figures 1, 1A, 1B et de la valve anti-retour selon les figures 2 et 3, sont en métal, par exemple en acier inoxydable travaillées par forgeage et/ou par usinage.

## Revendications

1. Dispositif à clapet de régulation du débit d'un fluide, du type de ceux comprenant :
➢ un corps (1, 101) comportant un passage d'entrée (2, 102) et un passage de sortie (3, 103) de fluide communiquant avec un logement (4, 104) prévu dans ce corps (1, 101); ce logement (4, 104) contenant notamment les éléments suivants, de préférence amovibles :
• au moins un clapet (6, 106) d'ouverture/fermeture mobile en translation;
• au moins une cage (8, 108) dans laquelle le clapet (6, 106) est guidé lors de ses déplacements en translation, ladite cage (8, 108) étant pourvue d'orifices de mise en communication du passage d'entrée (2, 102) et du passage de sortie (3, 103), en position d'ouverture du clapet (6, 106);
• au moins un siège (10, 110) destiné à coopérer avec le clapet (6, 106) en position de fermeture de ce dernier;
• au moins un contre-siège (11, 111) en appui sur une partie du corps (1, 101) à l'intérieur du logement (4, 104) contenant les éléments, de préférence amovibles,
• et au moins un joint d'étanchéité (13, 113) confmé entre le siège (10, 110) et le contre-siège (11, 111),
➢ et des moyens de compression (38, 39, 37, 40, 41-45, 117, 137) d'au moins une partie des éléments (8/108, 10/110, 11/111, 13/113), de préférence amovibles, contenus dans le logement (4, 104) du corps (1, 101);
**caractérisé en ce que** :
■ la fonction d'étanchéité siège (10, 110) /corps (1, 101), en position fermée du clapet (6, 106), est essentiellement assumée par le contre-siège (11, 111) en coopération avec le joint d'étanchéité (12, 112),
■ et la fonction de confinement du joint d'étanchéité (13, 113) est essentiellement assumée par le contre-siège (11, 111);
de sorte qu'intervienne un soulagement des contraintes s'exerçant sur le siège (10, 110) qui est alors peu, voire pas, déformé, ce qui lui permet d'assumer au mieux sa coopération par contact avec le clapet (6, 106), en position fermée de celui-ci, garantissant ainsi l'étanchéité de la fermeture siège(10, 110) /clapet (6, 106).

2. Dispositif selon la revendication 1, **caractérisé en ce que** le joint d'étanchéité (13, 113) est un joint annulaire logé dans une chambre de confinement délimitée :
• par une portée annulaire latérale externe (18) définie par une partie de la face interne du logement (4, 104) contenant les éléments (8/108, 10/110, 11/111, 13/113, 6/106) (de préférence amovibles) de l'ensemble (5, 105),
• par une portée annulaire supérieure (19) définie par une partie du siège (10, 110),
• et par au moins deux portées annulaires (20₁, 20₂) définies par une partie du contre-siège (11, 111), à savoir une portée latérale interne (20₂) et une portée inférieure (20₁), lesquelles ont ensemble une surface supérieure à celle de la portée annulaire supérieure (19) définie par une partie du siège (10, 110).

3. Dispositif selon la revendication 1 ou 2, **caractérisé en ce que** le contre-siège (11, 111) est un manchon cylindrique dont l'extrémité inférieure forme une collerette extérieure (21) reposant sur un épaulement annulaire (12, 112) du corps (1, 101) à l'intérieur du logement (4, 104) contenant les éléments (8/108, 10/110, 11/111, 12/112, 6/106) (de préférence amovibles) de l'ensemble (5, 105).

4. Dispositif selon la revendication 2 ou 3, **caractérisé en ce que** le siège (10, 110) est une bague en appui sur l'extrémité supérieure du manchon (11, 111) constituant le contre-siège, ladite bague (10, 110) présentant de préférence une lèvre périphérique (22) s'étendant vers le bas à partir de la face inférieure de ladite bague (10, 110) et conçue pour être insérée dans la chambre de confinement annulaire délimitée par le manchon (11, 111) du contre-siège avec ses portées annulaires latérale interne (20₂) et inférieure (20₁) et la face interne (18) du logement (4, 104) du corps (1, 101) contenant les éléments (8/108, 10/110, 11/111, 13/113, 6/106), de préférence amovibles, la partie considérée de cette face interne (18) du logement (4, 104) formant la portée annulaire latérale externe (18), tandis que la portée annulaire supérieure (19) est formée par la surface terminale inférieure de la susdite lèvre périphérique (22).

5. Dispositif selon l'une quelconque des revendications 1 à 4, **caractérisé en ce que** le joint d'étanchéité annulaire (13/113) a une section transversale droite de forme générale rectangulaire ou circulaire.

6. Dispositif selon l'une quelconque des revendications 3 à 5, **caractérisé en ce que** le joint d'étanchéité annulaire (13/113) est logé dans la chambre de confinement de même forme, délimitée par le manchon (11, 111) du contre-siège et la face interne (18) du logement (4, 104) du corps (1, 101) contenant les éléments (8/108, 10/110, 11/111, 13/113, 6/106), de préférence amovibles.

7. Dispositif selon l'une quelconque des revendications 1 à 6, **caractérisé en ce que** le siège (10) est une bague comportant un coin supérieur interne (23) chanfreiné et **en ce que** cette surface chanfreinée constitue une portée annulaire d'appui destinée à coopérer avec une portée annulaire de contact correspondante, prévue sur la surface extérieure d'une partie tronconique de la calotte sphérique formant l'extrémité inférieure du clapet (6), le ou les matériaux constitutifs des pièces comprenant ces portées annulaires étant de préférence choisis parmi les matériaux plus durs que l'acier inoxydable.

8. Dispositif selon l'une quelconque des revendications 1 à 7, **caractérisé en ce que** le joint d'étanchéité annulaire (13/113) est de nature et/ou de forme élastique, le graphite, de préférence le graphite expansé, étant tout spécialement approprié à titre de matériau constitutif dudit joint d'étanchéité annulaire (13/113).

9. Dispositif selon l'une quelconque des revendications 1 à 7, **caractérisé en ce qu'**il s'agit d'un robinet à clapet (6) comprenant:
➢ une tige de commande (7):
■ mobile en translation selon l'axe (XX') du robinet,
■ et dont l'extrémité libre inférieure (32) est solidaire du clapet (6),
➢ des moyens de manoeuvre (14) pour commander le mouvement de translation de ladite tige (7) et donc du clapet (6),
➢ des moyens d'étanchéité (15) propres à empêcher la fuite de fluide entre la cage (8) (de préférence amovible) et le logement (4),
➢ et un fourreau d'étanchéité (16) propre à empêcher la fuite de fluide entre la tige 7 et le logement (4), ledit fourreau enveloppant une portion de ladite tige 7;
les moyens de compression (38, 39, 37, 40, 41-45) agissant sur les éléments (8, 10, 11, 13), de préférence amovibles, superposés selon l'axe XX' du logement (4) et sur lesdits moyens d'étanchéité (16), pour réaliser l'étanchéité du dispositif.

10. Dispositif selon la revendication 9, **caractérisé en ce que** le fourreau d'étanchéité comprend un soufflet (16) -de préférence en acier inox- et/ou des garnitures -de préférence en graphite, et plus préférentiellement encore en graphite expansé-.

11. Dispositif selon la revendication 9 ou 10, **caractérisé en ce** les moyens de compression comportent:
➢ au moins deux mâchoires inférieure (38) et supérieure (39), la mâchoire inférieure (38) étant formée par au moins une partie de la zone supérieure du corps (1) bordant l'alésage constituant le haut du logement (4) du corps (1) et contenant les éléments (de préférence amovibles) : joint supérieur (15), cage (8), siège (10), joint inférieur (13), contre-siège (11),
➢ au moins un organe d'entretoisement coaxial à la tige de commande et dans lequel cette dernière est enfilée, cet organe d'entretoisement comprenant, de préférence, au moins trois éléments d'entretoisement superposés, à savoir:
■ un chapeau (37), d'une part, en appui, de préférence par l'intermédiaire d'un moyen d'étanchéité (15), sur la partie terminale supérieure (28) de la cage (8), et d'autre part, avantageusement solidaire de l'extrémité supérieure du fourreau d'étanchéité (16),
■ un fouloir (40),
■ un ou plusieurs bagues et/ou joints (41-45),
➢ des moyens de traction (46,47) permettant de serrer les mâchoires (38,39) et de comprimer ainsi :
■ les éléments d'entretoisement : chapeau (37), joint (41) éventuel, fouloir (40), bagues et/ou joints (41-45),
■ éventuellement le joint annulaire supérieur (15),
■ l'ensemble (5) d'éléments (de préférence amovibles) à savoir : la cage (8), le siège (10), le contre-siège (11) et le joint annulaire inférieur (13) interposé entre ces deux dernières pièces.

12. Dispositif selon l'une quelconque des revendications 1 à 8, **caractérisé en ce qu'**il s'agit d'une valve dont les moyens de compression (117) comprennent au moins un chapeau (137), de préférence amovible, formant couvercle fixé solidairement à l'extrémité supérieure ouverte du corps (101) correspondant au logement (104) contenant l'ensemble (105), de préférence amovible, cage (108)/siège (110)/joint (113)/contre-siège (111), ledit chapeau (137) appuyant sur la cage (108) comprimant ainsi le joint (113) interposé entre le siège (110) et le contre-siège (111).

13. Dispositif selon la revendication 12, **caractérisé en ce que** sont prévus, entre le clapet (106) et le chapeau (137), des moyens de rappel élastique du clapet (106) en position de fermeture de la valve, en appui sur le siège (110).

## Claims

1. Fluid flow control valve device of the kind comprising:
► a body (1, 101) comprising a fluid inlet passage (2, 102) and a fluid outlet passage (3, 103) communicating with a housing (4, 104) provided in this body (1, 101); this housing (4, 104) containing in particular the following elements, which are preferably removable:
• at least one valve opening/closure element (6, 106) able to move in translation;
• at least one cage (8, 108) in which the valve element (6, 106) is guided in its translational movements, said cage (8, 108) being provided with orifices for placing the inlet passage (2, 102) and the outlet passage (3, 103) in communication when the valve element (6, 106) is in the open position;
• at least one seat (10, 110) intended to collaborate with the valve element (6, 106) when the latter is in the closed position;
• at least one counter-seat (11, 111) bearing against a part of the body (1, 101) inside the housing (4, 104) containing the preferably removable elements,
• and at least one seal (13, 113) confined between the seat (10, 110) and the counter-seat (11, 111),
► and compression means (38, 39, 37, 40, 41-45, 117, 137) for compressing at least some of the preferably removable elements (8/108, 10/110, 11/111, 13/113) contained in the housing (4, 104) of the body (1, 101);
**characterized in that**
• the function of providing sealing between the seat (10, 110) and the body (1, 101) when the valve element (6, 106) is in the closed position is essentially assumed by the counter-seat (11, 111) in collaboration with the seal (12, 112),
• and the function of confining the seal (13, 113) is essentially assumed by the counter-seat (11, 111);
so that the stresses exerted on the seat (10, 110) are relieved so that the seat is deformed little, if at all, thus making it better able to collaborate through contact with the valve element (6, 106) when the latter is in the closed position, thus guaranteeing that the seat (10, 110)/valve element (6, 106) closure is leaktight.

2. Device according to Claim 1, **characterized in that** the seal (13, 113) is an annular seal housed in a confinement chamber delimited:
• by an external lateral annular bearing surface (18) defined by part of the internal face of the housing (4, 104) containing the (preferably removable) elements (8/108, 10/110, 11/111, 13/113, 6/106) of the assembly (5, 105),
• by an upper annular bearing surface (19) defined by part of the seat (10, 110),
• and by at least two annular bearing surfaces (20₁, 20₂) defined by part of the counter-seat (11, 111), namely an internal lateral bearing surface (20₂) and a lower bearing surface (20₁) which together have a surface area greater than that of the upper annular bearing surface (19) defined by part of the seat (10, 110).

3. Device according to Claim 1 or 2, **characterized in that** the counter-seat (11, 111) is a cylindrical cuff the lower end of which forms an external ring flange (21) resting on an annular shoulder (12, 112) of the body (1, 101) inside the housing (4, 104) containing the (preferably removable) elements (8/108, 10/110, 11/111, 12/112, 6/106) of the assembly (5, 105).

4. Device according to Claim 2 or 3, **characterized in that** the seat (10, 110) is a ring bearing against the upper end of the cuff (11, 111) constituting the counter-seat, said ring (10, 110) preferably having a peripheral lip (22) extending downwards from the lower face of said ring (10, 110) and designed to be inserted in the annular confinement chamber delimited by the cuff (11, 111) of the counter-seat and its internal lateral (20₂) and lower (20₁) annular bearing surfaces and the internal face (18) of the housing (4, 104) of the body (1, 101) containing the preferably removable elements (8/108, 10/110, 11/111, 13/113, 6/106), the relevant part of this internal face (18) of the housing (4, 104) forming the external lateral annular bearing surface (18) while the upper annular bearing surface (19) is formed by the lower end surface of the aforementioned peripheral lip (22).

5. Device according to any one of Claims 1 to 4, **characterized in that** the annular seal (13/113) has a cross section of rectangular or circular overall shape.

6. Device according to any one of Claims 3 to 5, **characterized in that** the annular seal (13/113) is housed in the confinement chamber of the same shape, delimited by the cuff (11, 111) of the counter-seat and the internal face (18) of the housing (4, 104) of the body (1, 101) containing the preferably removable elements (8/108, 10/110, 11/111, 13/113, 6/106).

7. Device according to any one of Claims 1 to 6, **characterized in that** the seat (10) is a ring comprising a chamfered internal upper corner (23) and **in that** this chamfered surface constitutes an annular bearing surface intended to collaborate with a corresponding annular bearing contact surface provided on the external surface of a frustoconical part of the spherical cup forming the lower end of the valve element (6), the material or materials of which the parts comprising these annular bearing surfaces are made preferably being chosen from materials which are harder than stainless steel.

8. Device according to any one of Claims 1 to 7, **characterized in that** the annular seal (13/113) is of an elastic nature and/or shape, graphite, preferably expanded graphite, being especially appropriate as a material from which to make said annular seal (13/113).

9. Device according to any one of Claims 1 to 7, **characterized in that** it is a gate valve (6) comprising:
► a control stem (7):
• able to move in translation along the axis (XX') of the valve,
• and the lower free end (32) of which is secured to the valve gate element (6),
► operating means (14) for initiating the translational movement of said stem (7) and therefore of the valve gate element (6),
► sealing means (15) capable of preventing fluid from leaking between the (preferably removable) cage (8) and the housing (4),
► and a sealing sleeve (16) able to prevent fluid from leaking between the stem (7) and the housing (4), said sleeve enveloping a portion of said stem (7);
the compression means (38, 39, 37, 40, 41-45) acting on the preferably removable elements (8, 10, 11, 13) superposed along the axis XX' of the housing (4) and on said sealing means (16) in order to seal the device.

10. Device according to Claim 9, **characterized in that** the sealing sleeve comprises a gaiter (16) - preferably made of stainless steel - and/or packings - preferably made of graphite and more preferably still made of expanded graphite.

11. Device according to Claim 9 or 10, **characterized in that** the compression means comprise:
► at least two jaws, a lower one (38) and an upper one (39), the lower jaw (38) being formed of at least part of the upper zone of the body (1) bordering the bore that constitutes the top of the housing (4) of the body (1) containing the (preferably removable) elements: upper seal (15), cage (8), seat (10), lower seal (13), counter-seat (11),
► at least one spacing member coaxial with the control stem and through which the latter is slipped, this spacing member preferably comprising at least three superposed spacing elements, namely:
• a bonnet (37), on the one hand, bearing, preferably via a sealing means (15), on the top end part (28) of the cage (8) and, on the other hand, advantageously secured to the upper end of the sealing sleeve (16),
• a gland (40),
• one or more rings and/or seals (41-45),
► tensioning means (46, 47) allowing the jaws (38, 39) to be clamped together and thus compress:
• the spacing elements: bonnet (37), seal (41), if present, gland (40), rings and/or seals (41-45),
• the upper annular seal (15), if present,
• the assembly (5) of (preferably removable) elements, namely: the cage (8), the seat (10), the counter-seat (11) and the lower annular seal (13) interposed between the latter two components.

12. Device according to any one of Claims 1 to 8, **characterized in that** it is a valve in which the compression means (117) comprise at least one, preferably removable, bonnet (137) forming a cover fixed securely to the open upper end of the body (101) corresponding to the housing (104) containing the preferably removable assembly (105) of the cage (108)/seat (110)/seal (113)/counter-seat (111), said bonnet (137) bearing against the cage (108) and thus compressing the seal (113) interposed between the seat (110) and the counter-seat (111).

13. Device according to Claim 12, **characterized in that**, between the valve element (106) and the bonnet (137) there are elastic return means for returning the valve element (106) to the valve-closed position, bearing against the seat (110).

## Patentansprüche

1. Fluiddurchflussregelventilvorrichtung vom Typ derjenigen, die:
- ein Gehäuse (1, 101), das einen Fluideinlassdurchgang (2, 102) und einen Fluidauslassdurchgang (3, 103) umfasst, welche mit einer in dem Gehäuse (1, 101) vorgesehenen Aufnahme (4, 104) in Verbindung stehen, die insbesondere folgende vorzugsweise lösbaren Elemente:
• mindestens einen hin- und herbeweglichen Öffnungs-/Schließ-Absperrkörper (6, 106),
• mindestens einen Käfig (8, 108), in welchem der Absperrkörper (6, 106) während seiner hin- und hergehenden Bewegungen geführt wird und welcher mit Öffnungen für das In-Verbindung-Bringen des Einlassdurchgangs (2, 102) mit dem Auslassdurchgang (3, 103) in der geöffneten Position des Absperrkörpers (6, 106) versehen ist,
• mindestens einen Sitz (10, 110), der vorgesehen ist, mit dem Absperrkörper (6, 106) in dessen geschlossener Position zusammenzuwirken,
• mindestens einen Gegensitz (11, 111) mit Auflage auf einem Teil des Gehäuses (1, 101) in der die vorzugsweise lösbaren Elemente enthaltenden Aufnahme (4, 104) und
• mindestens eine Dichtung (13, 113), die zwischen dem Sitz (10, 110) und dem Gegensitz (11, 111) eingeschlossen ist, enthält, und
- Mittel (38, 39, 37, 40, 41-45, 117, 137) zum Zusammendrücken wenigstens eines Teils der in der Aufnahme (4, 104) des Gehäuses (1, 101) enthaltenen vorzugsweise lösbaren Elemente (8/108, 10/110, 11/111, 13/113) umfassen,
**dadurch gekennzeichnet, dass**:
■ die Abdichtungsfunktion Sitz (10, 110)/Gehäuse (1, 101) in der geschlossenen Position des Absperrkörpers (6, 106) im Wesentlichen von dem Gegensitz (11, 111) im Zusammenwirken mit der Dichtung (12, 112) übernommen und
■ die Einschlussfunktion der Dichtung (13, 113) im Wesentlichen von dem Gegensitz (11, 111) derart übernommen wird,
dass eine Entlastung der Spannungen eintritt, die auf den Sitz (10, 110) ausgeübt werden, der dann wenig und sogar nicht verformt wird, was es ihm erlaubt, sein Zusammenwirken durch Kontakt mit dem Absperrkörper (6, 106) in dessen geschlossener Position am besten auszuüben, wodurch die Dichtheit des Verschlusses Sitz (10, 110) / Absperrkörper (6, 106) gewährleistet wird.

2. Vorrichtung nach Anspruch 1, **dadurch gekennzeichnet, dass** die Dichtung (13, 113) eine Ringdichtung ist, die von einer Einschlusskammer aufgenommen wird, die von:
• einer äußeren seitlichen, ringförmigen Auflagefläche (18), die von einem Teil der Innenseite der Aufnahme (4, 104) gebildet wird, welche die (vorzugsweise lösbaren) Elemente (8/108, 10/110, 11/111, 13/113, 6/106) der Einheit (5, 105) enthält,
• einer oberen ringförmigen Auflagefläche (19), die von einem Teil des Sitzes (10, 110) gebildet wird, und
• mindestens zwei ringförmigen Auflageflächen (20₁, 20₂), die von einem Teil des Gegensitzes (11, 111), nämlich einer inneren seitlichen Auflagefläche (20₂) und einer unteren Auflagefläche (20₁), gebildet werden, die zusammen eine Fläche haben, die größer als diejenige der oberen ringförmigen Auflagefläche (19) ist, die von einem Teil des Sitzes (10, 110) gebildet wird,
begrenzt wird.

3. Vorrichtung nach Anspruch 1 oder 2, **dadurch gekennzeichnet, dass** der Gegensitz (11, 111) eine zylindrische Buchse ist, deren unteres Ende einen äußeren Bund (21) bildet, der auf einem ringförmigen Absatz (12, 112) des Gehäuses (1, 101) in der Aufnahme (4, 104), welche die (vorzugsweise lösbaren) Elemente (8/108, 10/110, 11/111, 12/112, 6/106) der Einheit (5, 105) enthält, ruht.

4. Vorrichtung nach Anspruch 2 oder 3, **dadurch gekennzeichnet, dass** der Sitz (10, 110) ein Ring ist, der auf dem oberen Ende der den Gegensitz bildenden Buchse (11, 111) aufliegt und vorzugsweise eine Umfangslippe (22) aufweist, die sich ab der Unterseite des Rings (10, 110) nach unten erstreckt und konstruiert ist, um sich in die ringförmige Einschlusskammer einzufügen, die von der Buchse (11, 111) des Gegensitzes mit seiner inneren (20₂) und unteren seitlichen ringförmigen Auflagefläche (20₁) und der Innenseite (18) der Aufnahme (4, 104) des Gehäuses (1, 101), das die vorzugsweise lösbaren Elemente (8/108, 10/110, 11/111, 13/113, 6/106) enthält, begrenzt wird, wobei der betreffende Teil dieser Innenseite (18) der Aufnahme (4, 104) die äußere seitliche ringförmige Auflagefläche (18) bildet, während die obere ringförmige Auflagefläche (19) von der unteren Endfläche der Umfangslippe (22) gebildet wird.

5. Vorrichtung nach einem der Ansprüche 1 bis 4, **dadurch gekennzeichnet, dass** die Ringdichtung (13/113) einen Querschnitt mit im Allgemeinen rechtwinkliger oder kreisrunder Form hat.

6. Vorrichtung nach einem der Ansprüche 3 bis 5, **dadurch gekennzeichnet, dass** die Ringdichtung (13/113) von der Einschlusskammer mit derselben Form aufgenommen wird, die von der Buchse (11, 111) des Gegensitzes und der Innenseite (18) der Aufnahme (4, 104) des die vorzugsweise lösbaren Elemente (8/108, 10/110, 11/111, 13/113, 6/106) enthaltenden Gehäuses (1, 101) begrenzt wird.

7. Vorrichtung nach einem der Ansprüche 1 bis 6, **dadurch gekennzeichnet, dass** der Sitz (10) ein Ring ist, der eine angefaste innere obere Kante (23) umfasst, und dass diese angefaste Fläche eine ringförmige Auflagefläche bildet, die vorgesehen ist, mit einer entsprechenden ringförmigen Kontaktauflagefläche zusammenzuwirken, die auf der Außenfläche eines kegelstumpfförmigen Teils der halbkugelförmigen Kuppe vorgesehen ist, die das untere Ende des Absperrkörpers (6) bildet, wobei das (die) Material(ien), das (die) die Teile bildet (bilden), welche diese ringförmigen Auflageflächen umfassen, vorzugsweise aus härteren Materialien als rostfreier Stahl ausgewählt ist (sind).

8. Vorrichtung nach einem der Ansprüche 1 bis 7, **dadurch gekennzeichnet, dass** die Ringdichtung (13/113) einen elastischen Charakter und/oder eine elastische Form hat, wobei Graphit, vorzugsweise Schaumgraphit, als die Ringdichtung (13/113) bildendes Material besonders geeignet ist.

9. Vorrichtung nach einem der Ansprüche 1 bis 7, **dadurch gekennzeichnet, dass** es sich um einen Hahn mit einem Absperrkörper (6) handelt, der:
- eine Steuerstange (7), die
■ in der (XX')-Achse des Hahns hin- und herbeweglich ist und
■ deren unteres freies Ende (32) mit dem Absperrkörper (6) fest verbunden ist,
- Betätigungsmittel (14), um die hin- und hergehende Bewegung der Stange (7) und damit des Absperrkörpers (6) zu steuern,
- Dichtungsmittel (15), die geeignet sind, den Austritt des Fluids zwischen dem (vorzugsweise lösbaren) Käfig (8) und der Aufnahme (4) zu verhindern, und
- eine Dichtungsmanschette (16), die geeignet ist, den Austritt des Fluids zwischen der Steuerstange (7) und der Aufnahme (4) zu verhindern und welche einen Teil dieser Stange (7) umhüllt,
umfasst, wobei die Druckmittel (38, 39, 37, 40, 41-45), die auf die vorzugsweise lösbaren Elemente (8, 10, 11, 13) einwirken, in der XX'-Achse der Aufnahme (4) und auf den Dichtungsmitteln (16) übereinander angeordnet sind, um für die Dichtheit der Vorrichtung zu sorgen.

10. Vorrichtung nach Anspruch 9, **dadurch gekennzeichnet, dass** die Dichtungsmanschette einen Balg (16), vorzugsweise aus rostfreiem Stahl, und/oder Dichtungspackungen, vorzugsweise aus Graphit und besonders bevorzugt aus Schaumgraphit, umfasst.

11. Vorrichtung nach Anspruch 9 oder 10, **dadurch gekennzeichnet, dass** die Druckmittel:
- mindestens zwei Backen, eine untere (38) und eine obere (39), wobei die untere Backe (38) von wenigstens einem Teil des oberen Bereichs des Gehäuses (1) gebildet wird, der an die Bohrung angrenzt, die den oberen Teil der Aufnahme (4) des Gehäuses (1) bildet und die (vorzugsweise lösbaren) Elemente: obere Dichtung (15), Käfig 8), Sitz (10), untere Dichtung (13) und Gegensitz (11) enthält,
- mindestens ein Versteifungsorgan, das zu der Steuerstange koaxial ist und in welchem diese eingebaut ist, wobei das Versteifungsorgan vorzugsweise mindestens drei übereinander angeordnete Versteifungselemente umfasst, nämlich:
■ eine Kappe (37), die einerseits vorzugsweise über ein Dichtungsmittel (15) auf dem oberen Endteil (28) des Käfigs (8) aufliegt und andererseits vorteilhafterweise mit dem oberen Ende der Dichtungsmanschette (16) fest verbunden ist,
■ einen Dichtungspacker (40) und
■ ein(e) oder mehrere Ringe und/oder Dichtungen (41-45) und
- Zugmittel (46, 47), die es erlauben, die Backen (38, 30) anzuziehen und so:
■ die Versteifungselemente: Kappe (37), gegebenenfalls Dichtung (41), Dichtungspresser (40), Ringe und/oder Dichtungen (41-45),
■ gegebenenfalls die obere Ringdichtung (15) und
■ die Einheit (5) aus (vorzugsweise lösbaren) Elementen, nämlich: Käfig (8), Sitz (10), Gegensitz (11) und untere Ringdichtung (13), die zwischen den letzten zwei Bauteilen eingefügt ist, zusammenzudrücken,
umfassen.

12. Vorrichtung nach einem der Ansprüche 1 bis 8, **dadurch gekennzeichnet, dass** es sich um ein Ventil handelt, dessen Druckmittel (117) mindestens eine vorzugsweise lösbare Kappe (137), die einen Deckel bildet, der fest mit dem offenen oberen Ende des Gehäuses (101), das der Aufnahme (104) entspricht, verbunden ist, welche die vorzugsweise lösbare Einheit (105), Käfig (108)/Sitz (110)/Dichtung (113)/Gegensitz (111) enthält, umfassen, wobei die Kappe (117) auf dem Käfig (108) aufliegt und so die Dichtung (113) zusammendrückt, die zwischen dem Sitz (110) und dem Gegensitz (111) eingelegt ist.

13. Vorrichtung nach Anspruch 12, **dadurch gekennzeichnet, dass** zwischen dem Absperrkörper (106) und der Kappe (137) elastische Mittel für das Rückstellen des Absperrkörpers (106) in die Schließposition des Ventils bei Auflage auf dem Sitz (110) vorgesehen sind.
